# DEMANDE DE BREVET EUROPEEN

(11) **EP 0 884 920 A1**
(43) Date de publication de la demande: **16.12.1998**
(21) Numéro de dépôt: 98401358.1
(22) Date de dépôt: 08.06.1998
(51) Int. Cl.: H04Q 7/38

(54) **Procédé d'émission de canaux logiques de contrôle diffusés, par une station de base d'un système de radiocommunication numérique cellulaire**

(30) Priorité: 09.06.1997 FR 9707098
(71) Demandeur: ALCATEL ALSTHOM COMPAGNIE GENERALE D'ELECTRICITE, 75008 Paris (FR)
(72) Inventeur: Le Strat, Evelyne, 75015 Paris (FR); Szalajski, David, 78000 Versailles (FR)
(74) Mandataire: El Manouni, Josiane

(57) **Abrégé**

L'invention concerne un procédé d'émission de canaux logiques de contrôle diffusés (B, F, S) par une station de base d'un système de radiocommunication numérique cellulaire. Les canaux logiques de contrôle diffusés sont multiplexés entre eux, et éventuellement avec d'autres canaux logiques tels que notamment des canaux logiques de contrôle communs (C) et/ou des canaux logiques de contrôle dédiés autonomes, sur au moins un canal physique constitué par la récurrence d'un intervalle de temps particulier dans chaque trame d'une porteuse.

Selon l'invention, on distingue un premier ensemble, comprenant le ou les canaux logiques de contrôle diffusés (F, S) qui portent des informations utiles à la mise en oeuvre de transferts intercellulaires, et un second ensemble, comprenant le ou les canaux logiques de contrôle diffusés (B) qui portent des informations inutiles à la mise en oeuvre de transferts intercellulaires. Par ailleurs, le ou les canaux logiques (F, S) du premier ensemble sont portés par un premier canal physique, celui ou ceux (B) du second ensemble étant portés par un second canal physique.

## Description

Le domaine de l'invention est celui des systèmes de radiocommunication numériques cellulaires avec des mobiles, tels que ceux conçus selon le standard de radiotélécommunication public GSM.

Par standard GSM, on entend ici aussi bien le standard GSM 900 ("Groupe Spécial systèmes Mobiles publics de radiocommunication fonctionnant dans la bande des 900 MHz") que le standard DCS 1800 ("Digital Cellular System" fonctionnant dans la bande des 1800 MHz).

Plus précisément, l'invention concerne un procédé d'émission, par une station de base d'un système de radiocommunication numérique cellulaire, de canaux logiques de contrôle diffusés.

On rappelle que d'une façon générale, un système de radiocommunication numérique cellulaire est mis en oeuvre au sein d'un réseau de cellules géographiques parcouru par des stations mobiles. Une station de base est associée à chaque cellule, et une station mobile communique par l'intermédiaire de la station de base associée à la cellule dans laquelle elle se trouve.

On rappelle également que chaque station de base utilise un certain nombre de canaux logiques de contrôle (également appelés canaux logiques de signalisation) pour transmettre de la signalisation vers les stations mobiles (voie descendante).

Parmi ces canaux logiques de contrôle de la voie descendante, on distingue généralement:
- les canaux logiques de contrôle diffusés (canaux point à multipoint). Dans le standard GSM, il s'agit notamment des canaux BCCH, FCH et SCH ;
- les canaux logiques de contrôle communs (canaux point à multipoint). Dans le standard GSM, il s'agit notamment des canaux AGCH et PCH ;
- les canaux logiques de contrôle dédiés autonomes (canaux point à point). Dans le standard GSM, il s'agit notamment des canaux SDCCH ;
- les canaux logiques de contrôle associés (canaux point à point). Dans le standard GSM, il s'agit notamment des canaux SACCH et FACCH.

Dans le cadre de la présente invention, on s'intéresse uniquement aux canaux logiques de contrôle diffusés. Ainsi, dans le cas du GSM, chaque station de base émet les canaux logiques de contrôle diffusés suivant :
- un canal BCCH (pour "Broadcast Control CHannel" en langue anglaise), qui fournit à toutes les stations mobiles des informations générales sur le réseau, la cellule dans laquelle la station mobile se trouve et les cellules adjacentes ;
- un canal SCH (pour "Synchronization CHannel" en langue anglaise), qui porte des informations permettant la synchronisation des trames et l'identification du transmetteur de la station de base. Le canal FCH est aussi appelé canal de synchronisation temporelle ;
- un canal FCH (pour "Frequency CHannel" en langue anglaise), qui donne des informations sur la porteuse utilisée. Le canal FCH est aussi appelé canal de synchronisation fréquentielle.

Il est à noter que dans le GSM, on désigne parfois (à tort et par excès de language) l'ensemble des canaux logiques de contrôle diffusés par les termes "canaux BCCH", alors que les canaux BCCH ne correspondent en réalité qu'à une des familles de canaux logiques de contrôle diffusés (au même titre que les canaux FCH et SCH).

Traditionnellement, tous les canaux logiques de contrôle diffusés sont multiplexés entre eux, et éventuellement avec d'autres canaux logiques tels que notamment des canaux logiques de contrôle communs (AGCH, PCH) et/ou des canaux logiques de contrôle dédiés autonomes (SDCCH), sur un unique canal physique. Cet unique canal physique est constitué par la récurrence d'un intervalle de temps particulier dans chaque trame d'une porteuse particulière. Dans le cas du GSM, il s'agit de la récurrence du premier intervalle de temps de chaque trame de la porteuse BCCH de la voie descendante.

On rappelle en effet que, de façon classique, chaque station de base (et donc chaque cellule) utilise un ou plusieurs couples de porteuses radio, dont obligatoirement un couple de porteuses BCCH qui lui est propre. Les porteuses d'un même couple sont utilisées respectivement pour la voie montante (station mobile vers station de base) et pour la voie descendante (station de base vers station mobile).

On rappelle également que chaque porteuse est segmentée de manière temporelle en utilisant un schéma fixe de multiplexage à répartition dans le temps (AMRT). Selon ce schéma, l'axe temporel est divisé en trames successives de durée fixe, chacune de ces trames étant elle-même divisée en un nombre déterminé d'intervalles de temps, la récurrence d'un intervalle de temps particulier dans chaque trame constituant un canal physique sur lequel peuvent être multiplexés plusieurs canaux logiques.

Il apparaît que la solution actuelle précitée, qui consiste à utiliser un canal physique unique pour émettre l'ensemble des canaux logiques de contrôle diffusés, n'est pas entièrement satisfaisante.

En effet, l'utilisation d'un canal physique unique va à l'encontre d'une grande efficacité dans la pré-synchronisation d'une station mobile en vue de la mise en oeuvre d'un transfert intercellulaire (handover en langue anglaise).

On comprend effectivement qu'en raison du grand nombre de canaux logiques multiplexés sur cet unique canal physique, la lecture des canaux essentiels au transfert intercellulaire est retardée, et l'exécution du transfert intercellulaire s'en trouve ralentie. En d'autres termes, les transferts intercellulaires ne sont pas optimisés du fait que le délai d'acquisition des informations essentielles aux transferts intercellulaires est retardé d'autant que les autres informations occupent une partie importante du débit du canal physique utilisé.

Cette contrainte apparaît en particulier dans un environnement microcellulaire pour des transferts intercellulaires décidés par la station mobile.

On constate que dans un réseau microcellulaire (par exemple de type Manhattan) où une station mobile est amenée à changer de cellule très rapidement et sans grande visibilité sur les cellules avoisinantes, ce retard de synchronisation peut même induire une perte de la communication.

L'invention a notamment pour objectif de pallier cet inconvénient majeur de l'état de la technique.

Plus précisément, l'un des objectifs de la présente invention est de fournir un procédé d'émission de canaux logiques de contrôle diffusés par une station de base d'un système de radiocommunication numérique cellulaire, permettant, pour un nombre donné de stations de base à décoder, une exécution plus rapide des transferts intercellulaires.

L'invention a également pour objectif de fournir un tel procédé, permettant d'augmenter le nombre de stations de base pouvant être décodées par seconde par une station mobile.

Ces différents objectifs, ainsi que d'autres qui apparaîtront par la suite, sont atteints selon l'invention à l'aide d'un procédé d'émission de canaux logiques de contrôle diffusés par une station de base d'un système de radiocommunication numérique cellulaire, à destination d'une pluralité de stations mobiles,
ladite station de base étant associée à une cellule, dite cellule courante, lesdits canaux logiques de contrôle diffusés étant multiplexés entre eux, et éventuellement avec d'autres canaux logiques tels que notamment des canaux logiques de contrôle communs et/ou des canaux logiques de contrôle dédiés autonomes, sur au moins un canal physique constitué par la récurrence d'un intervalle de temps particulier dans chaque trame d'une porteuse,
caractérisé en ce qu'on distingue :
- un premier ensemble comprenant le ou les canaux logiques de contrôle diffusés qui portent des informations utiles à la mise en oeuvre de transferts intercellulaires, et
- un second ensemble comprenant le ou les canaux logiques de contrôle diffusés qui portent des informations inutiles à la mise en oeuvre de transferts intercellulaires,
et en ce que le ou les canaux logiques du premier ensemble sont portés par un premier canal physique, celui ou ceux du second ensemble étant portés par un second canal physique.

Les canaux logiques du premier ensemble portent des informations devant être décodées rapidement par les stations mobiles, puisqu'elles sont utiles à la mise en oeuvre des transferts intercellulaires. En revanche, les canaux logiques du second ensemble portent des informations pouvant être décodées plus lentement par les stations mobiles, puisqu'elles ne sont pas utiles à la mise en oeuvre des transferts intercellulaires.

Chaque ensemble de canaux logiques étant émis sur son propre canal physique, l'invention permet un décodage plus rapide des informations.

En effet, notamment, sur le premier canal physique portant les canaux logiques du premier ensemble, la fréquence d'apparition des informations utiles aux transferts intercellulaires est augmentée. Contrairement à ce qui se passe avec la technique actuelle précitée, le délai d'acquisition des informations essentielles aux transferts intercellulaires n'est pas retardé par la présence d'autres informations occupant une partie importante du débit du premier canal physique. Ce sont les canaux logiques du second ensemble, qui sont portés par le second canal physique, qui véhiculent ces autres informations.

En permettant un décodage plus rapide des informations utiles aux transferts intercellulaires, le procédé de l'invention permet d'augmenter le nombre de stations de base voisines pouvant être décodées par seconde par une station mobile en communication. Par ailleurs, pour un nombre donné de stations de base voisines à décoder, le procédé de l'invention permet une exécution plus rapide des transferts intercellulaires. Cet avantage est déterminant dans les villes où la station de base cible est repérée au dernier moment.

En outre, en distinguant deux classes d'informations, et donc de canaux logiques de contrôle diffusés, le procédé de l'invention assure une plus grande flexibilité.

De façon avantageuse, lesdites informations utiles à la mise en oeuvre de transferts intercellulaires appartiennent au groupe comprenant :
- les informations de synchronisation fréquentielle ;
- les informations de synchronisation temporelle.

Avantageusement, lesdites informations inutiles à la mise en oeuvre de transferts intercellulaires appartiennent au groupe comprenant :
- les informations générales sur le réseau ;
- les informations générales sur la cellule courante ;
- les informations générales sur les cellules adjacentes à la cellule courante.

Dans un mode de réalisation particulier de l'invention, ledit premier ensemble comprend notamment un canal de synchronisation fréquentielle et un canal de synchronisation temporelle, et ledit second ensemble comprend notamment un canal d'information générale sur le réseau et/ou la cellule courante et/ou les cellules adjacentes.

Avantageusement, lesdits premier et second canaux physiques sont portés par une même porteuse.

Selon une variante, lesdits premier et second canaux physiques sont portés par deux porteuses distinctes.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- les figures 1A et 1B d'une part et la figure 2 d'autre part présentent respectivement un premier et un second modes de réalisation du procédé selon l'invention ;
- la figure 3 présente un exemple de multiplexage des canaux du premier ensemble sur le premier canal physique ; et
- la figure 4 présente un exemple de multiplexage des canaux du second ensemble sur le second canal physique.

L'invention concerne donc l'émission de canaux logiques de contrôle diffusés par une station de base (ou BTS) d'un système de radiocommunication numérique cellulaire.

Selon l'invention, on distingue :
- un premier ensemble comprenant tous les canaux logiques de contrôle diffusés qui portent des informations utiles à la mise en oeuvre de transferts intercellulaires, et
- un second ensemble comprenant tous les autres canaux logiques de contrôle diffusés (c'est-à-dire ceux qui portent des informations autres que celles utiles à la mise en oeuvre de transferts intercellulaires).

Egalement selon la présente invention, les canaux logiques du premier ensemble sont portés par un premier canal physique, et ceux du second ensemble sont portés par un second canal physique.

Par informations utiles à la mise en oeuvre de transferts intercellulaires, on entend par exemple les informations de synchronisation fréquentielle et les informations de synchronisation temporelle.

Par autres informations que celles utiles à la mise en oeuvre de transferts intercellulaires, on entend par exemple les informations générales sur le réseau, les informations générales sur la cellule courante et les informations générales sur les cellules adjacentes à la cellule courante.

On rappelle que, de façon classique, un canal physique est constitué par la récurrence d'un intervalle de temps particulier dans chaque trame d'une porteuse.

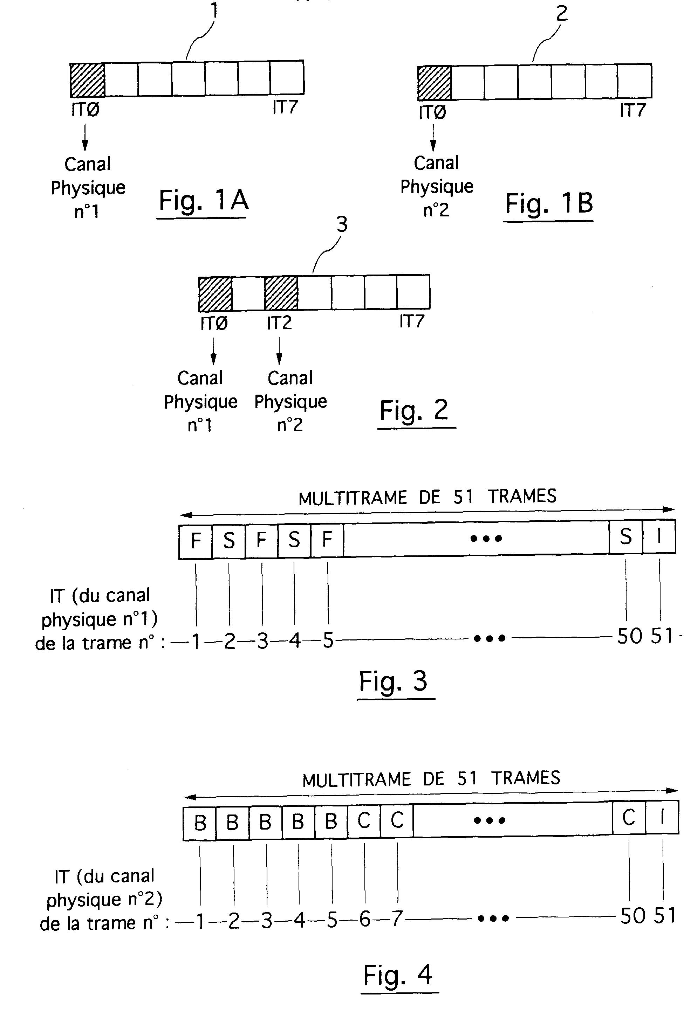

Dans un premier mode de réalisation de l'invention (cf fig. 1A et 1B), les premier et second canaux physiques (portant respectivement les premier et second ensembles de canaux logiques) sont portés par deux porteuses distinctes. Chacune des figures 1A et 1B présente une trame 1, 2 d'une de ces deux porteuses. Dans cet exemple, le premier canal physique ("n°1") est constitué par la récurrence du premier intervalle de temps IT0 de chaque trame 1 d'une des deux porteuses concernées (par exemple la porteuse BCCH classique), et le second canal physique ("n°2") est constitué par la récurrence du premier intervalle de temps IT0 de chaque trame 2 de l'autre des deux porteuses concernées (par exemple une porteuse du même type que la porteuse BCCH classique).

Dans un second mode de réalisation de l'invention (cf fig.2), les premier et second canaux physiques (portant respectivement les premier et second ensembles de canaux logiques) sont portés par une même porteuse (par exemple la porteuse BCCH classique). Dans cet exemple, les premier et second canaux physiques ("n°1" et "n°2" respectivement) sont constitués par la récurrence des premier et troisième intervalles de temps IT0, IT2 respectivement de chaque trame 3 de la porteuse concernée.

Les stations mobiles connaissent la fréquence de cette ou de chacune de ces deux porteuses, cette ou ces fréquences constituant une information par exemple diffusée dans un des canaux du second ensemble (puisqu'il ne s'agit pas d'une information utile au transferts intercellulaires).

Dans la suite de la description, on présente l'application du procédé de l'invention dans le cas d'un système de type GSM. Il est clair cependant que la présente invention peut s'appliquer à tout type de système de radiocommunication numérique cellulaire.

Ainsi, dans le cas du GSM, le premier ensemble précité comprend par exemple notamment un canal de synchronisation fréquentielle (ou canal logique FCH) et un canal de synchronisation temporelle (ou canal logique SCH), et le second ensemble comprend par exemple notamment un canal d'information générale sur le réseau, sur la cellule courante et sur les cellules adjacentes (ou canal logique BCCH).

Pour chaque nouvelle station de base qu'elle écoute, la station mobile doit décoder les informations dans un certain ordre, à savoir :
- phsae 1 : les informations de synchronisation fréquentielle (canal logique FCH) ;
- phase 2 : les informations de synchronisation temporelle (canal logique SCH) ; et
- phase 3 : les informations générales sur le réseau, la cellule courante et les cellules adjacentes (canal logique BCCH).

La station mobile reçoit les informations des phases 1 et 2, sur des canaux logiques de contrôle diffusé FCH et SCH portés par le premier canal physique, puis les informations de la phase 3, sur le canal logique de contrôle diffusé BCCH porté par le second canal physique.

Seuls les canaux logiques FCH et SCH étant multiplexés sur le premier canal physique, les informations qu'ils véhiculent reviennent plus souvent. Ainsi, une station mobile en communication qui écoute ce premier canal physique peut se synchroniser plus rapidement et la durée d'exécution du transfert intercellulaire est donc réduite. Le second canal physique est écouté, et les informations correspondantes décodées, par les stations mobiles qui ne sont pas en communication.

La figure 3 présente un exemple de multiplexage des canaux du premier ensemble sur le premier canal physique. Dans cet exemple, le multiplexage utilise une multitrame constituée de 51 trames. L'intervalle de temps dont la récurrence constitue le premier canal physique précité comprend alternativement, dans les trames n° 1 à 50, un palier (ou burst) du canal logique FCH (noté "F" sur la figure 3) ou SCH (noté "S" sur la figure 3), la trame n° 51 étant une trame libre (intervalle de temps noté "I").

La figure 4 présente un exemple de multiplexage des canaux du second ensemble sur le second canal physique. Dans cet exemple, le multiplexage utilise également une multitrame constituée de 51 trames. L'intervalle de temps dont la récurrence constitue le second canal physique précité comprend un palier du canal logique BCCH (noté "B" sur la figure 4) dans les trames n° 1 à 5, un palier du canal logique AGCH ou PCH (noté "C" sur la figure 4) dans les trames n° 6 à 50, la trame n° 51 étant une trame libre (intervalle de temps noté "I").

Ainsi, dans cet exemple, le canal logique de contrôle diffusé BCCH du second ensemble est multiplexé avec les canaux logiques de contrôle communs AGCH et PCH. Il est clair qu'il pourrait également être multipléxé avec les canaux logiques de contrôle dédiés autonomes SDCCH.

A titre de comparaison, on rappelle que dans le GSM classique, tous les canaux logiques de contrôle diffusés FCH, SCH et BCCH sont multiplexés entre eux et avec les canaux logiques de contrôle communs AGCH et PCH (et même éventuellement avec les canaux logiques de contrôle dédiés autonomes SDCCH), selon une multitrame à 51 trames, sur un unique canal physique. Dans cette multitrame classique, les canaux FCH et SCH apparaissent 5 fois, à savoir dans les trames n° 1, 11, 21, 31 et 41.

Comme cela apparaît clairement sur la figure 3, le procédé de l'invention permet de faire apparaître plus souvent les canaux logiques FCH et SCH, puisqu'ils apparaissent 25 fois par multitrame, à savoir dans une trame sur deux, de la trame n° 1 à la trame n° 50. Le délai pour qu'une station mobile "tombe" sur le canal FCH est donc réduit, et le transfert intercellulaire peut se faire plus rapidement.

Il est clair que de nombreux autres modes de réalisation de l'invention peuvent être envisagés. On peut notamment prévoir d'autres types de multitrames. On peut également compléter ou modifier les listes de canaux dans chacun des deux ensembles précités.

## Revendications

1. Procédé d'émission de canaux logiques de contrôle diffusés (B, F, S) par une station de base d'un système de radiocommunication numérique cellulaire, à destination d'une pluralité de stations mobiles,
ladite station de base étant associée à une cellule, dite cellule courante, lesdits canaux logiques de contrôle diffusés étant multiplexés entre eux, et éventuellement avec d'autres canaux logiques tels que notamment des canaux logiques de contrôle communs (C) et/ou des canaux logiques de contrôle dédiés autonomes, sur au moins un canal physique constitué par la récurrence d'un intervalle de temps particulier dans chaque trame d'une porteuse,
caractérisé en ce qu'on distingue :
- un premier ensemble comprenant le ou les canaux logiques de contrôle diffusés (F, S) qui portent des informations utiles à la mise en oeuvre de transferts intercellulaires, et
- un second ensemble comprenant le ou les canaux logiques de contrôle diffusés (B) qui portent des informations inutiles à la mise en oeuvre de transferts intercellulaires,
et en ce que le ou les canaux logiques (F, S) du premier ensemble sont portés par un premier canal physique, celui ou ceux (B) du second ensemble étant portés par un second canal physique.

2. Procédé selon la revendication 1, caractérisé en ce que lesdites informations utiles à la mise en oeuvre de transferts intercellulaires appartiennent au groupe comprenant :
- les informations de synchronisation fréquentielle ;
- les informations de synchronisation temporelle.

3. Procédé selon l'une quelconque des revendications 1 et 2, caractérisé en ce que lesdites informations inutiles à la mise en oeuvre de transferts intercellulaires appartiennent au groupe comprenant :
- les informations générales sur le réseau ;
- les informations générales sur la cellule courante ;
- les informations générales sur les cellules adjacentes à la cellule courante.

4. Procédé selon l'une quelconque des revendications 1 à 3, caractérisé en ce que ledit premier ensemble comprend notamment un canal de synchronisation fréquentielle (F) et un canal de synchronisation temporelle (S).

5. Procédé selon l'une quelconque des revendications 1 à 4, caractérisé en ce que ledit second ensemble comprend notamment un canal d'information générale sur le réseau et/ou la cellule courante et/ou les cellules adjacentes (B).

6. Procédé selon l'une quelconque des revendications 1 à 5, caractérisé en ce que lesdits premier et second canaux physiques sont portés par une même porteuse.

7. Procédé selon l'une quelconque des revendications 1 à 5, caractérisé en ce que lesdits premier et second canaux physiques sont portés par deux porteuses distinctes.
